# EUROPEAN PATENT APPLICATION

(11) **EP 3 915 359 A1**
(43) Date of publication of application: **01.12.2021**
(21) Application number: 21175618.4
(22) Date of filing: 25.05.2021
(51) Int. Cl.: A01G 9/16, A01G 9/14, E04H 15/34

(54) **MODULAR HIGH TUNNEL**

(30) Priority: 28.05.2020 NO 20200627
(71) Applicant: Sørstrøm, Stein Erik, 7021 Trondheim (NO)
(72) Inventor: Sørstrøm, Stein Erik, 7021 Trondheim (NO)
(74) Representative: Bryn Aarflot AS

(57) **Abstract**

The invention relates to a quickly deployable and collapsible modular structure for plant growth including support frames including support frame elements each having a cross-sectional profile for holding multiple cover layers and for adapted for sliding the roof covers in place or slidably removing the roof cover layers. The invention also relates to support frame elements of the support frames, connector pieces for interconnecting the support frame elements, and a method for deploying the collapsible high tunnel according to the invention.

## Description

### Field of the invention

The invention relates to a modular structure for plant growth.

### Background

In greenhouse-based agriculture, high tunnels are known for being light, provide large volumetric capacity, and being more versatile than permanent greenhouse structures. However, installing and dismantling of high tunnels may be complex and time consuming.

Polymeric, translucent and flexible roof covers are used as an alternative to rigid greenhouse roof covers and are commonly used in polytunnels such as hoophouses with semi-circular support frames. Polytunnels usually have a single continuous polymer roof cover spanning over multiple support frames. A disadvantage with such roof covers is that a single tear may expand and result in costly repair as a large part of the roofing may need to be replaced.

Greenhouse structures may be subject to severe environmental strain such as heavy wind loading, and their stability and resistance is mostly dependent on the support frame structure. Roof and wall covers as such provide little or no stability, especially structures with flexible roof and walls.

It is an object of the invention to provide a high tunnel for plant growth that may be installed or dismantled quickly and easily, as well as providing cost efficient and easy maintenance of a roof cover, and also to provide the possibility of modifying the roof cover sections to improve plant growth conditions. The invention also provides a strong support structure with increased stability and resistance to wind loading where the roof and wall covers assist in stabilizing the high tunnel structure. In addition, the invention is also easily compatible with guy wires.

### Summary of the invention

The invention relates to a collapsible structure for plant growth comprising a plurality of support frames, at least one support rod connected to and stretching between each support frame, a plurality of roof and wall cover sections comprising a first roof cover film and/or a second roof cover film, each support frame comprising at least four support frame elements connected to each other by means of angled corner connector pieces, wherein the support frame elements and the angled connector pieces have a identical cross-sectional profile symmetrical about a vertical center axis of the cross-sectional profile, each roof cover film being located between and having edgings slidably attachable to the support frame elements, the cross-sectional profile of the support frame elements and the angled connector pieces comprising: a first roof cover guide rail on each side of said axis adapted to receive the edging of the first roof cover film and/or a second roof cover guide rail on each side of said axis adapted to receive the edging of the second roof cover film, and a side utility guide rail on each side of said axis adapted to receive support rod connection means for connecting a support rod to the support frame element.

The invention further relates to said structure, wherein the support rods are collapsible support rods.

The invention further relates to said structure, wherein the collapsible support rods include a central joint piece and a locking tube to cover the central joint piece.

The invention further relates to said structure, wherein the support rod connection means is a support rod connector slidable along the side utility guide rail.

The invention further relates to said structure, wherein the collapsible support rods can pivot about a fastening pin of the support rod connector.

The invention further relates to said structure, wherein the support rods are rigid non-collapsible support rods.

The invention further relates to said structure, wherein the support rod connection means is a bolt including a nut, the bolt being slidable along the side utility guide rail.

The invention further relates to said structure, wherein the structure is made of aluminium.

The invention further relates to said structure, wherein the roof cover sections are translucent flexible roof cover films including an edging made of Keder cord, fabric, polymer or composite material.

The invention further relates to a support frame element according to said structure.

The invention further relates to an angled connector piece according to said structure.

The invention further relates to a method of deploying said collapsible structure including the steps of placing a first support frame of a collapsed structure on a ground surface, anchoring the first support frame to a mooring with a line, and stretching the collapsed structure out in a direction away from the mooring, placing each support frame along the ground surface.

The invention further relates to said method, wherein the support frames of the collapsed structure are pre-mounted with flexible roof cover sections.

The invention further relates to said method, wherein the support frames of the collapsed structure are pre-mounted with collapsible support rods.

The invention further relates to said method, further including the step of mounting rigid non-collapsible support rod between the support frames.

### Brief description of the figures

Fig. 1 is a perspective view of an assembled high tunnel according to the invention;
Fig. 2 is a perspective view of a single support frame as shown in Fig. 1;
Fig. 3 is a perspective view of two interconnected support frames according to Fig. 2;
Fig. 4 is a perspective view a plurality of interconnected support frames according to Fig. 2;
Fig. 5 is a perspective view of an end portion of a support frame element according to the invention;
Fig. 6 shows a cross-section of a support frame element according to Fig. 5 with roof covers attached;
Fig. 7 is a perspective view of a support frame element along with an axial piece connector for connecting two support frame elements;
Fig. 8 is a perspective view of a corner piece;
Fig. 9 is a perspective view of a support frame element and a collapsible support rod;
Fig. 10 is a perspective view of a collapsible support rod connected to two support frame elements in an unlocked state;
Fig. 11 is a perspective view of a collapsible support rod as shown in Fig. 10 in a locked state;
Fig. 12 is a perspective view of a collapsible support rod as shown in Fig. 10 in an unlocked, semi-collapsed state;
Fig. 13 is a perspective view of a central joint piece of the collapsible support rod as shown in Fig. 10-12;
Fig. 14 shows a cross-section of a support frame element and a side view of a non-collapsible support rod;
Fig. 15 is a perspective view of a shoulder corner connector piece equipped with an eye bolt; and
Fig. 16 is a side view of the high tunnel according to the invention during installation.

### Detailed description of the invention

Terms like 'bottom', 'top', 'upper', 'lower', 'beneath', 'above', 'inner', 'outer' and 'below' are to be interpreted as relative to the object(s) at hand in its orientation as described or depicted in the figures, not necessarily relative to the surrounding environment.

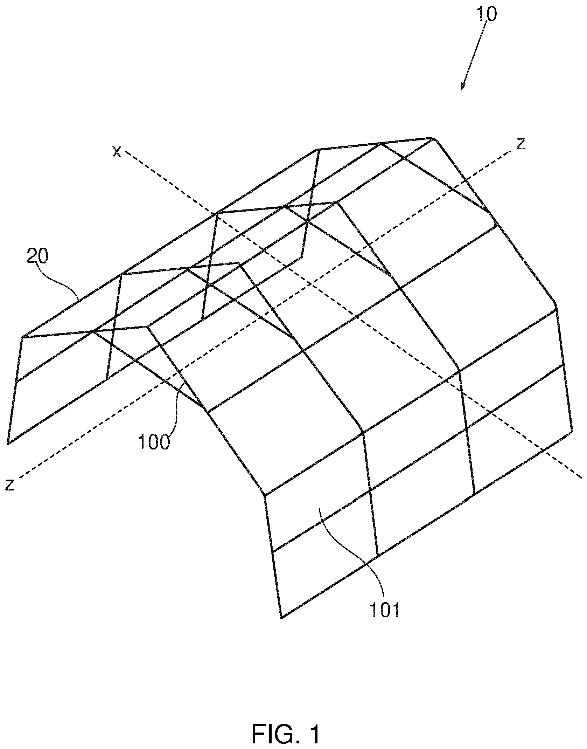

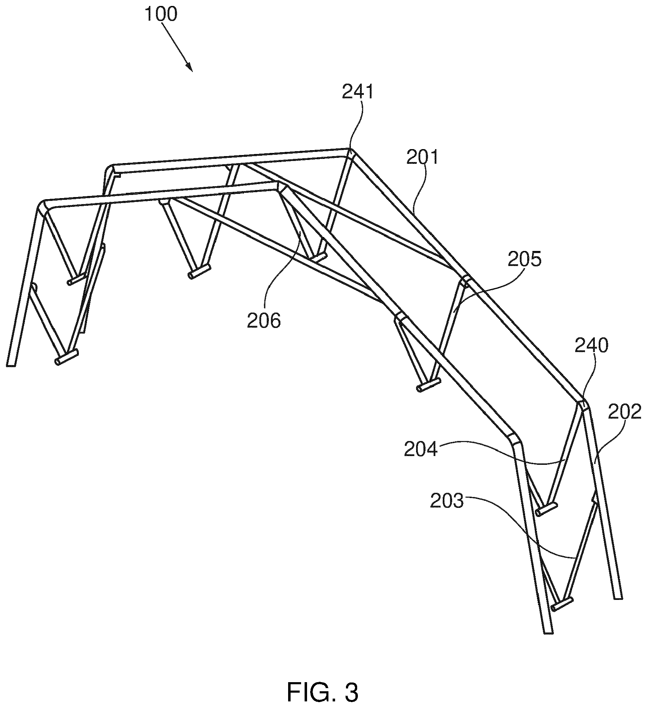

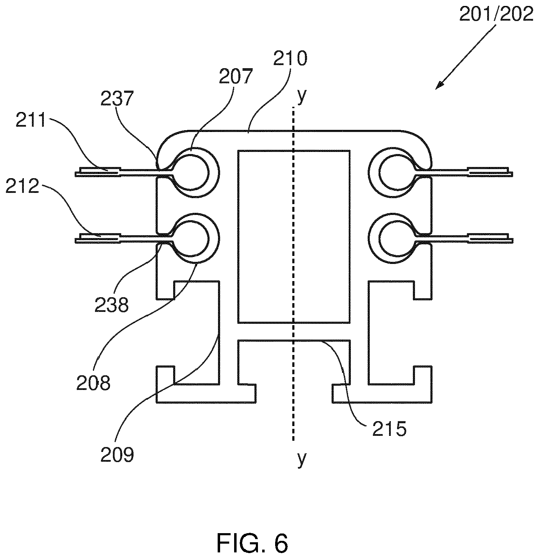

Fig. 1 is a perspective view of a high tunnel 10 according to the invention in an assembled state. The high tunnel 10 is a structure suitable for growing plants inside such as a greenhouse. The high tunnel 10 includes at least two support frames 100 placed along a longitudinal z-axis. Each support frame 100 is connected to an adjacent support frame 100 by means of at least one support rod 20 stretching between support frames 100. In Fig. 1, Fig. 2, and Fig. 3, seven support rods are used to interconnect the support frames 100. The support rods 20 are removable and/or collapsible, and the high tunnel 10 itself is therefore also collapsible. The support frames are made of a lightweight and strong material such as aluminium but may also be made of other materials such as an aluminium composite material, PVC or other composites. The high tunnel 10 further includes several roof and wall cover sections 101 located between and slidably attached to the support frames 100. The wall covers sections are located between the lower support frame elements 202 (see Fig. 3) and the roof cover sections are located between the upper support frame elements 201 (see Fig. 3). In this application both roof and wall cover sections are referred to as roof cover sections. The roof cover sections 101 are held by the support frames 100. The roof cover sections 101 may include several layers (see Fig. 6). A roof cover section 101 may extend continuously from ground level on one side of the high tunnel 10 to the ground level on the other side of the high tunnel 10. The high tunnel 10 may also include several roof cover sections 101 between two support frames 100. The roof cover sections 101 are flexible, and the high tunnel 10 can be collapsed with the roof covers 101 still attached to the support frames 100 with or without support rods 20. In a collapsed state the support frames 100 along with the other components of the high tunnel 10 are compressed and packed together. In an expanded state as shown in Fig. 1, the support frames 100 are spaced apart and the support rods are straightened. The high tunnel 10 may be collapsed and expanded like an accordion in a sense. One may also use the term retracted instead of collapsed.

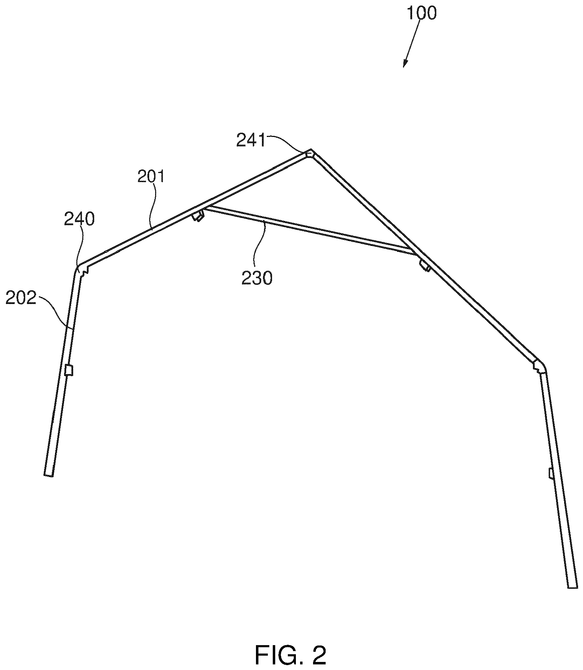

Fig. 2 is a perspective view of a single support frame 100 of a high tunnel 10 according to Fig. 1. The support frame 100 includes two lower support frame elements 202 serving as ground support columns, and two upper support frame elements 201 serving as support rafters. The support frame 100 also includes a transversal support frame element 230 serving as a collar tie. Each lower support frame element 202 is connected to an upper support frame element 201 via a shoulder corner connector piece 240, and each upper support element 201 is connected to an adjacent upper support frame element 201 via a ridge corner connector piece 241.

Fig. 3 is a perspective view of two interconnected support frames 100 as shown in Fig. 2. Seven collapsible support rods 203, 204, 205, 206 are used to interconnect the support frames 100: two lower collapsible support rods 203 each interconnecting two lower support frame elements 202, two collapsible corner support rods 204 each interconnecting two shoulder corner connector pieces 240, two upper collapsible support rods 205 each interconnecting two upper support frame elements 201 and an upper middle collapsible support rod 206 serving as a ridge beam interconnecting two ridge corner connector pieces 241. The support rods 203, 204, 205, 206 in Fig. 3 are shown in a semi collapsed state.

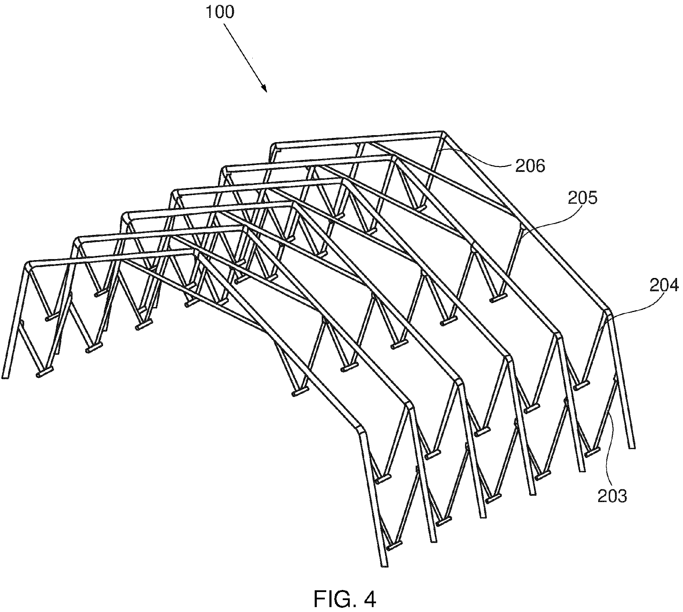

Fig. 4 is a perspective view a plurality of interconnected support frames 100 according as shown in Fig. 3. The support rods 203, 204, 205, 206 in Fig. 4 are shown in a semi collapsed state.

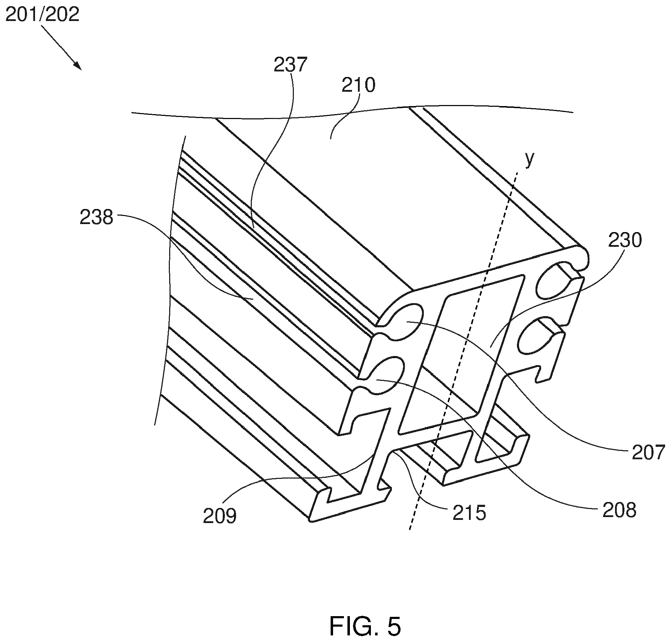

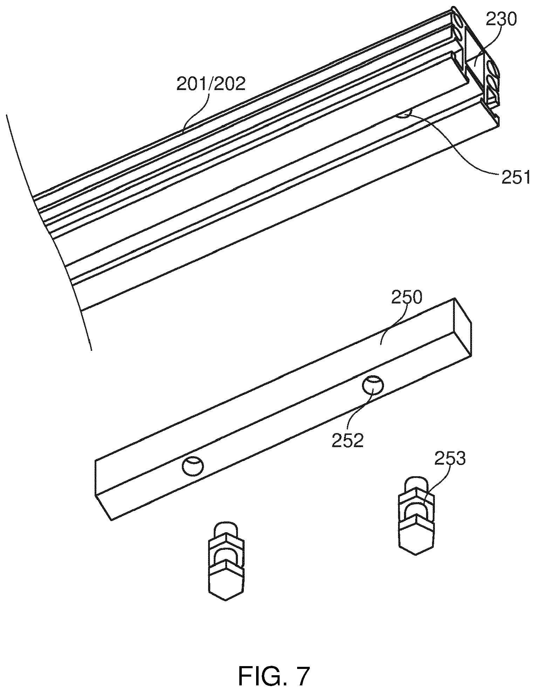

Fig. 5 is a perspective view of an end portion of a support frame element 201, 202. The support frame element 201, 202 is symmetrical about its vertical centre axis labelled y. The support frame element 201, 202 has an outer surface 210. When the high tunnel 10 (see Fig. 1) is assembled, the outer surface 210 faces the outside environment. The support frame element 201, 202 further includes a side utility guide rail 209 on each side of the z-axis, and an underside utility guide rail 215 located on the underside of the support frame element 201, 202 opposite to the outer surface 210. The side utility guide rails 209 and the underside utility guide rail 215 may be used for attaching support rods directly or via a slidable connector. The support frame element 201, 202 further include two roof cover guide rails 207, 208 on each side of the z-axis: an outer roof cover guide rail 207 having an outer roof cover guide rail slip 237 and an inner roof cover guide rail 208 having an inner roof cover guide rail slip 238. The guide rail slips 237, 238 provide openings for roof cover films 211, 212 (see Fig. 6). The support frame element 201, 202 also includes a rectangular central channel 230 for receiving an axial piece connector 250 (see Fig. 7).

Fig. 6 shows a cross-section of a support frame element 201, 202. The support frame elements 201, 202 serve not only as a structural framework, but also as a holding profile for the roof cover sections 101 (see Fig. 1). Each cover section 101 may include an outer roof cover film 211 and/or an inner roof cover film 212, and the roof cover sections 101 may also be completely removed. This gives the ability to adjust the level of insulation and/or to ventilate. The guide rails 207, 208 serve as guides for roof cover films 211, 212. The outer roof cover guide rail 207 is adapted to receive an edging of an outer roof cover film 211 and the inner roof cover guide rail 208 is adapted to receive an edging of an inner roof cover film 212. The edging of the roof cover films 211, 212 can be made of Keder cord, fabric, polymer or composite material. The guide rails 207, 208 function as conventional keder-rails. The diameter of the edgings are in any case larger than the width of the roof cover guide rail slips 237, 238. When two roof cover films 211, 212 are mounted between two support frame elements 201, 202, an insulating air layer is formed between the roof cover films 211, 212.

The roof cover films 211, 212 can be made of a translucent material for protecting the inside of the high tunnel 10 (see Fig. 1) from environmental strain while at the same time allowing in sunlight. The high tunnel 10 may therefore function as a greenhouse. The translucent material can be a flexible polymer, fabric or composite. The translucent material can also be a translucent polymer bubble film such as Polydress® LP-KederAir. By using edgings such as Keder cord and fastening the roof cover sections 101 to the support frames 100 as mentioned above, the high tunnel 10 achieves a superior stability compared with conventional greenhouse tunnels where roof and wall covers overlap support frames. The roof cover sections 101 including the edgings form part of the supporting structure of the high tunnel 10 and provide shear and tension strength between support frame elements 201, 202.

Fig. 7 is a perspective view of a support frame element 201, 202 along with an axial piece connector 250 for connecting two support frame elements 201, 202. The axial piece connector 250 fits the central channel 230 of the support frame element 201, 202 and includes threaded connector holes 252 for receiving a screw 253. Both the central channel 230 and the axial piece connector can have a rectangular cross section. Correspondingly, the support frame element 201 can include threaded frame holes 251. In order to connect two support frame elements 201, 202, the axial piece connector 250 is inserted into a central channel 230 of a first support frame element 201, 202 so that a threaded connector hole 230 overlaps a threaded frame hole 251 of the first support frame element 201, 202. The axial piece connector 250 is fastened by a screw 253 penetrating the threaded frame hole 251 and the threaded connector hole 230. Subsequently, a second support frame element 201, 202 can be correspondingly mounted to the other half of the axial piece connector 250.

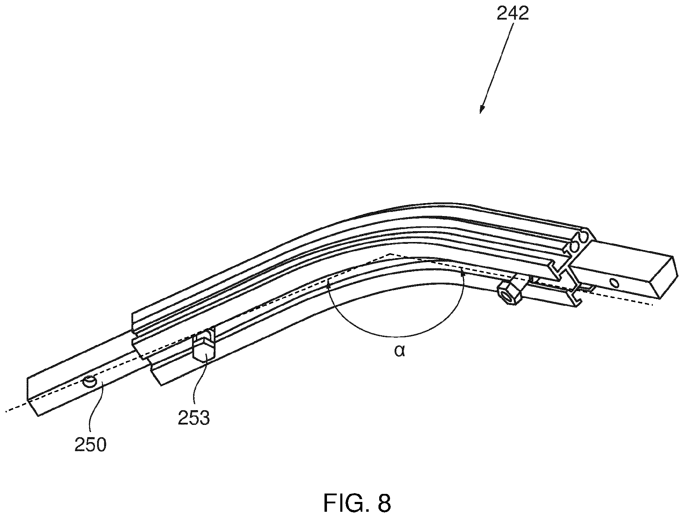

Fig. 8 is a perspective view of a corner piece 242. The shoulder corner connector piece 240 and the ridge corner connector piece 241 (see Fig. 2) are shaped identical to and coincide with the corner piece 242 with the exception that the shoulder corner connector piece 240 may have a different corner angle α than the ridge corner connector piece 241, and therefore they are distinguished. The corner angle α can be between 120° and 140°. The corner piece 242 has the same cross-sectional profile as the support frame element 201, 202 (see Fig. 5 and 6) so that all support frame element 201, 202 guides and rails are continued by the corner piece 242. Fig. 8 further shows an axial piece connector 250 mounted to the corner piece 242 by means of a screw 253. Support frame elements 201, 202 can be axially connected to the corner piece 242 in the same manner as for two support frame elements 201, 202 as previously described using an axial piece connector 250.

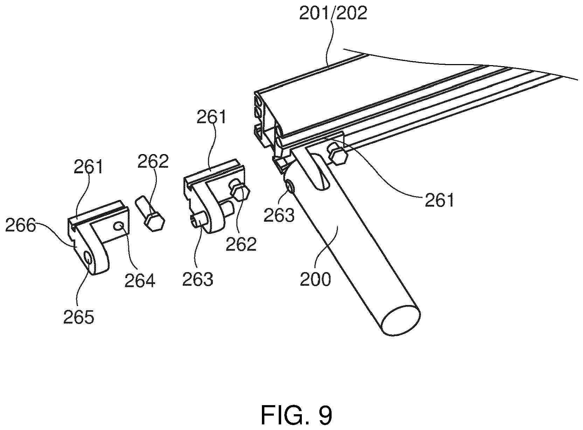

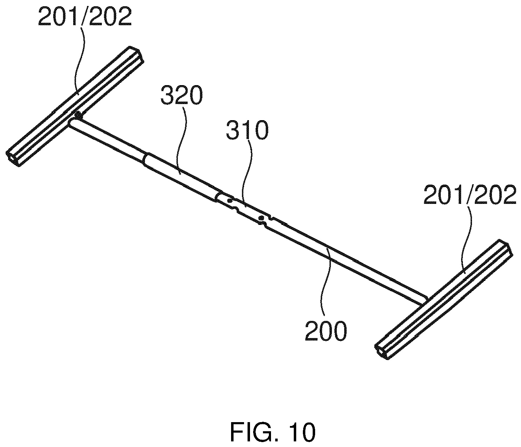

Fig. 9 is a perspective view of a support frame element 201, 202 and a collapsible support rod 200. A collapsible support rod 200 can be connected to a support frame element 201, 202 via a support rod connector 261. The support rod connector 261 is shaped to fit and slidable along any of the side utility guide rails 209 (see Fig. 5) of the support frame element 201, 202. The support rod connector 261 can be fastened to the support frame element 201, 202 by means of a support rod connector screw 262. The support rod connector 261 further includes a fastening pin 263 that fits inside a second support rod connector hole 265 extending through a support rod receiver portion 266 perpendicular to the support frame element 201, 202 when the support rod connector 261 is inserted in the support frame element 201, 202. A collapsible support rod 200 can at both ends include a recess shaped to be received by the support rod receiver portion 266. The collapsible support rod 200 can further include a through hole at its end for receiving a fastening pin 263. When mounted, the collapsible support rod 200 is free to pivot about the fastening pin 263 axis which is parallel to the support frame element 201, 202. During installation, a first support rod connector 261 is inserted in a side utility guide rail 209 and positioned, after which the support rod connector screw 262 is inserted in a threaded first support rod connector hole 264 and tightened to such an extent that the support rod connector screw 262 abuts against support frame element 201, 202 preventing the first support rod connector 261 from moving. A second support rod connector (see Fig. 10) is mounted to an adjacent support frame element 201, 202. The collapsible support rod 200 is fastened to the first support rod connector 261 by means of a fastening pin, and correspondingly fastened to the second support rod connector. A support rod connector 261 can also be mounted to a corner piece 242 (see Fig. 8) and slide along a side utility guide rail 209 of the corner piece 242. The support rod connector 261 may also slide from a support frame element 201, 202 and to an adjacent corner piece 242.

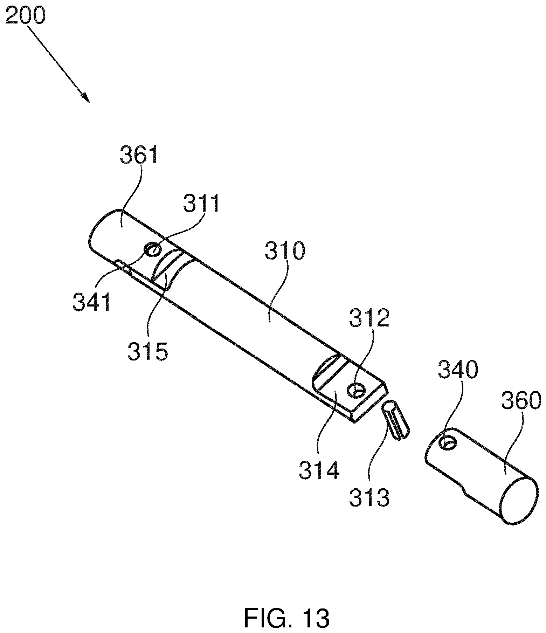

Fig. 10 is a perspective view of a collapsible support rod 200 connected to two support frame elements 201, 202 in an unlocked state. The collapsible support rod 200 includes a central joint piece 310 (see Fig. 13) which serves as a joint and allows the collapsible support rod 200 to collapse. The collapsible support rod 200 further includes a moveable locking tube 320 for covering and disabling the central joint piece 310 preventing the collapsible support rod 200 from collapsing. In Fig. 10 the locking tube 320 is placed away from the central joint piece 310 which puts the collapsible support rod 200 in an unlocked state.

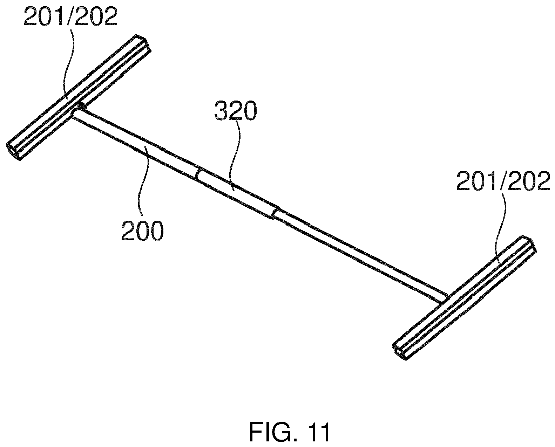

Fig. 11 is a perspective view of a collapsible support rod 200 as shown in Fig. 10 in a locked state where the locking tube 320 covers the central joint piece 310 preventing the collapsible support rod 200 from collapsing, which puts the collapsible support rod 200 in a locked state.

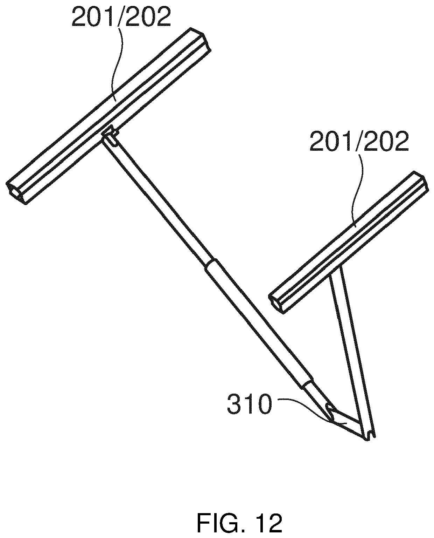

Fig. 12 is a perspective view of a collapsible support rod 200 as shown in Fig. 10 in a semi-collapsed state.

Fig. 13 is a perspective view of a central joint piece 310 of the collapsible support rod 200 as shown in Fig. 10-12. The central joint piece 310 includes a first through hole 311 and a second through hole 312 in which a joint piece fastening pin 313 can be inserted. Fig. 13 further shows a first collapsible support rod end portion 360 including a first end portion through hole 340 and a second collapsible support rod end portion 361 including a second end portion through hole 341. The collapsible support rod end portions 360, 361 include recesses shaped to be received by a first flat end potion 314 and a second flat end portion 315 of the central joint piece 310. During assembly, a joint piece fastening pin 313 is inserted in the first end portion through hole 340 and further through the first through hole 312, and a second joint piece fastening pin (not shown) is inserted in first end portion through hole 341 and further through the second through hole 311. The central joint piece 310 forms part of the collapsible support rod 200 which may pivot about the axes of the joint piece fastening pins 313.

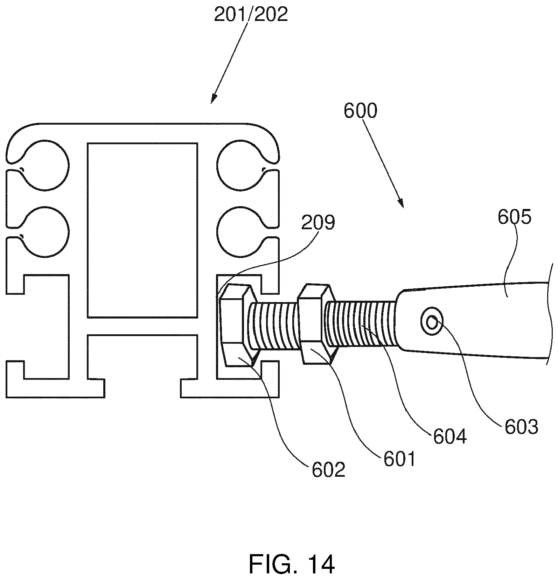

Fig. 14 shows a cross-section of a support frame element 201, 202 and a side view of a non-collapsible support rod 600. The support rods 20, 200, 203, 204, 205, 206 as shown in Fig. 1 and Fig. 3 may be replaced with a rigid non-collapsible support rod 600. The non-collapsible support rod 600 may be inserted in a side utility rail 209 and fastened to support frame elements 201, 202 directly without the use of a connector piece. The non-collapsible support rod 600 includes a main shaft 605, a bolt 602 with a nut 601 and a threaded portion 604 which fits a side utility rail 209 of a support frame element 201, 202. The bolt 602 can be inserted into a side utility rail 209 and slid along the side utility rail 209 of a support frame element 201, 202 or a corner piece 242 until a desired position is reached. In order to fasten the bolt 602 to a support frame element 201, 202, the nut is screwed until it abuts the support frame element 201, 202. The non-collapsible support rod 600 may be connected to or removed from the bolt 602 by respectively screwing or unscrewing the non-collapsible support rod 600 onto or from the threaded portion 604 optionally with the help of a torque shaft (not shown) inserted into a torque shaft hole 603. Multiple bolts 602 may be pre-fastened in support frame elements 201, 202, ready to receive a non-collapsible support rod 600.

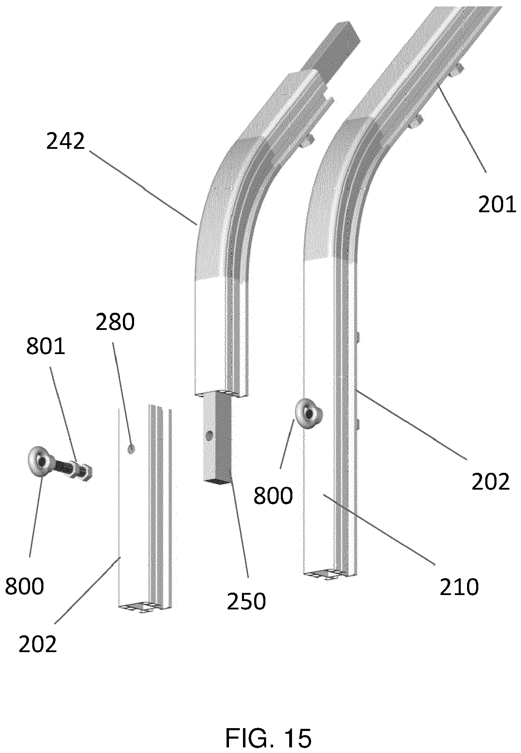

Fig. 15 is a perspective view of a shoulder corner connector piece 241 equipped with an eye bolt 800. A corner piece 242, more specifically a shoulder corner connector piece 241, connecting a lower support frame element 202 and an upper support frame element 201 may be equipped with an eye bolt 800 extending through the whole lower support frame element 202 through an eye bolt through hole 280. The eye bolt loop sits perpendicular to the outer surface 210 and faces the outside environment. The eye bolt 800 is adapted to receive a guy wire (not shown), anchored to the ground, adding stability and resistance to environmental strain such as wind loading. The eye bolt 800 includes at least one nut 801 for fastening the eyebolt to the support frame element 202, the nut 801 being fastened against the underside utility guide rail surface 215 (see Fig. 6). The eye bolt 800 may also include two nuts, one nut fastened against the outer surface 210 of the lower support frame element 202 and one nut fastened against the underside utility guide rail 215 surface. The eye bolt 800 also extends through an axial piece connector 250 and serves both as a fastening point for a guy wire and a locking screw for connecting a shoulder corner connector piece 241 to an upper support frame element 201. The embodiment of Fig. 15 is advantageous in that guy wires may be fastened to the high tunnel without piercing though a cover of the high tunnel.

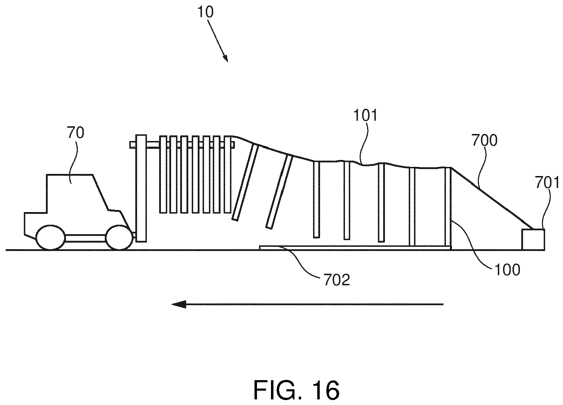

Fig. 16 is a side view of the high tunnel 10 according to the invention during installation. In this figure a collapsed high tunnel 10 is stretched out along its longitudinal z-axis (see Fig. 1) with the help of a forklift 70. Initially, a collapsed high tunnel 10 including either collapsible support rods 200 or roof cover sections 101 attached between the support frames 100 or both, is lifted by e.g. a forklift 70 or a tractor and transported to a suitable location for deployment. A first support frame 200 of the high tunnel 10 is placed on a ground surface 702 or directly on the ground. The ground surface 702 may concrete, cement, metal, wood or plastic. The ground surface 702 may be shaped as two oblong elements or rails extending along the longitudinal z-axis leaving room for soil in between, or it may cover the entire floor surface of the high tunnel 10. The first support frame 100 is then anchored to a mooring 701 with a line 700. The collapsed high tunnel 10 is thereafter stretched out in a direction away from the mooring 701 as indicated by the arrow in Fig. 16, placing each support frame 100 along the surface 702 in a distance between each other limited by the length of the roof cover sections 101 and/or the collapsible support rods 200.

| | | | |
|---|---|---|---|
| 10 | High tunnel | 250 | Axial piece connector |
| 20 | Support rod | 251 | Threaded frame hole |
| 100 | Support frame | 252 | Threaded connector hole |
| 101 | Roof cover section | 253 | Screw |
| 200 | Support rod | 261 | Support rod connector |
| 201 | Upper support frame element | 262 | Support rod connector screw |
| 202 | Lower support frame element | 263 | Fastening pin |
| 203 | Lower collapsible support rod | 264 | First support rod connector hole |
| 204 | Collapsible corner support rod | 265 | Second support rod connector hole |
| 205 | Upper collapsible support rod | 266 | Support rod receiver portion |
| 206 | Upper middle collapsible support rod | 310 | Central joint piece |
| 207 | Outer roof cover guide rail | 311 | First through hole |
| 208 | Inner roof cover guide rail | 312 | Second through hole |
| 209 | Side utility guide rail | 313 | Joint piece fastening pin |
| 210 | Outer surface | 314 | First flat end potion |
| 211 | Outer roof cover film | 315 | Second flat end portion |
| 212 | Inner roof cover film | 320 | Central joint piece |
| 215 | Underside utility guide rail | 340 | First end portion through hole |
| 230 | transversal support frame element | 341 | Second end portion through hole |
| 237 | Outer roof cover guide rail slip | 360 | First collapsible support rod end portion |
| 238 | Inner roof cover guide rail slip | 361 | Second collapsible support rod end portion |
| 240 | Shoulder corner connector piece | 600 | Non-collapsible support rod |
| 241 | Ridge corner connector piece | 601 | Nut |
| 242 | Corner piece | 602 | Bolt |
| 280 | Eye bolt through hole | 603 | Torque shaft hole |
| 70 | Forklift | 604 | Threaded portion |
| 700 | Line | 605 | Main shaft |
| 701 | Mooring | 800 | Eye bolt |
| 702 | Ground surface | 801 | Eye bolt nut |

## Claims

1. A collapsible structure (10) for plant growth comprising:
a plurality of support frames (100), at least one support rod (20, 200, 600) connected to and stretching between each support frame (100),
a plurality of roof and wall cover sections (101) comprising a first roof cover film (211) and/or a second roof cover film (212),
each support frame (100) comprising at least four support frame elements (201, 202) connected to each other by means of angled corner connector pieces (240, 241), wherein the support frame elements (201, 202) and the angled connector pieces (240, 241) have a identical cross-sectional profile symmetrical about a vertical center axis of the cross-sectional profile,
each roof cover film (201, 202) being located between and having edgings slidably attachable to the support frame elements (201, 202),
the cross-sectional profile of the support frame elements (201, 202) and the angled connector pieces (240, 241) comprising:
a first roof cover guide rail (207) on each side of said axis adapted to receive the edging of the first roof cover film (211) and/or a second roof cover guide rail (208) on each side of said axis adapted to receive the edging of the second roof cover film (212); and
a side utility guide rail (209) on each side of said axis adapted to receive support rod connection means (261, 602) for connecting a support rod (20, 200, 600) to the support frame element (201, 202).

2. The structure (10) according to claim 1, wherein the support rods (20, 200, 600) are collapsible support rods (200).

3. The structure (10) according to claim 2, wherein the collapsible support rods (200) comprise a central joint piece (310) and a locking tube (320) to cover the central joint piece (310).

4. The structure (10) according to any of the preceding claims wherein the support rod connection means (261, 602) is a support rod connector (261) slidable along the side utility guide rail (209).

5. The structure (10) according to claim 1, wherein the collapsible support rods (200) can pivot about a fastening pin (263) of the support rod connector (261).

6. The structure (10) according to claim 1, wherein the support rods (20, 200, 600) are rigid non-collapsible support rods (600).

7. The structure (10) according to any of the preceding claims wherein the support rod connection means (261, 602) is a bolt (602) comprising a nut (601), the bolt (602) being slidable along the side utility guide rail (209).

8. The structure (10) according to any preceding claim, wherein the roof cover sections (101) are translucent flexible roof cover films (211, 212) and the edgings are made of Keder cord, fabric, polymer or composite material.

9. A support frame element (201, 202) according to any of the preceding claims.

10. An angled connector piece (240, 241) according to any of the preceding claims 1-9.

11. A method of deploying a collapsible structure (10) according to any preceding claim 1-9, comprising the steps of:
- placing a first support frame (100) of the collapsible structure (10) in a collapsed state on a ground surface (702);
- anchoring the first support frame (100) to a mooring (701) with a line (700);
- stretching the collapsed structure (10) out in a direction away from the mooring (701), placing each support frame (100) along the ground surface (702).

12. The method according to claim 11, wherein the support frames (100) of the collapsed structure (10) are pre-mounted with flexible roof cover sections (101).

13. The method according to claim 11, wherein the support frames (100) of the collapsed structure (10) are pre-mounted with collapsible support rods (200).

14. The method according to claim 11 or 12, further comprising the step of mounting rigid non-collapsible support rod (600) between the support frames (100).
